# EUROPÄISCHE PATENTSCHRIFT

(11) **EP 1 866 239 B1**
(45) Veröffentlichungstag und Bekanntmachung des Hinweises auf die Patenterteilung: **18.01.2012**
(21) Anmeldenummer: 06743192.4
(22) Anmeldetag: 20.02.2006
(51) Int. Cl.: C01B 7/04

(54) **VERFAHREN ZUR HERSTELLUNG VON CHLOR**
METHOD FOR PRODUCING CHLORINE
PROCEDE POUR PRODUIRE DU CHLORE

(30) Priorität: 23.02.2005 DE 102005008612
(43) Veröffentlichungstag der Anmeldung: 19.12.2007
(73) Patentinhaber: BASF SE, 67056 Ludwigshafen (DE)
(72) Erfinder: SESING, Martin, 67165 Waldsee (DE); DIEFENBACHER, Armin, 76726 Germersheim (DE); VOSS, Hartwig, 67227 Frankenthal (DE); SCHUBERT, Olga, 67063 Ludwigshafen (DE); SEIDEMANN, Lothar, 67346 SPEYER (DE); KARCHES, Martin, 67434 Neustadt (DE); GRASSLER, Thomas, 67117 Limburgerhof (DE); STROEFER, Eckhard, 68163 Mannheim (DE)
(86) Internationale Anmeldenummer: PCT/EP2006/060105
(87) Internationale Veröffentlichungsnummer: WO 2006/089877

(56) Entgegenhaltungen:
- WO-A-2004/037718
- US-A- 5 861 049
- US-B1- 6 387 345

## Beschreibung

Die Erfindung betrifft ein Verfahren zur Herstellung von Chlor durch katalytische Chlorwasserstoff-Oxidation.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenienrngsreaktionen, etwa bei der Isocyanat-Herstellung, als Koppelprodukt an. Der bei der Isocyanatherstellung gebildete Chlorwasserstoff wird überwiegend in der Oxichlorierung von Ethylen zu 1,2-Dichlorethan eingesetzt, das zu Vinylchlorid und schließlich zu PVC weiterverarbeitet wird.

EP-A 0 765 838 offenbart ein Verfahren zur Aufarbeitung des bei der Chlorwasserstoff-Oxidation entstehenden Reaktionsgases aus Chlor, Chlorwasserstoff, Sauerstoff und Wasserdampf, bei dem das aus dem Oxidationsreaktor austretende Reaktionsgas so weit abgekühlt wird, dass Reaktionswasser und Chlorwasserstoff in Form von konzentrierter Salzsäure auskondensieren, die konzentrierte Salzsäure von dem Reaktionsgas abgetrennt und ausgeschleust wird, das verbleibende, im Wesentlichen von Wasser und einem Teil des Chlorwasserstoffs befreite Reaktionsgas getrocknet wird, das getrocknete Reaktionsgas aus Chlor, Sauerstoff und Chlorwasserstoff auf 1 bis 30 bar verdichtet und das verdichtete Reaktionsgas gekühlt und dabei zum größten Teil verflüssigt wird, wobei nicht auskondensierbare Komponenten des Reaktionsgases zumindest teilweise in den Oxidationsreaktor zurückgeführt werden.

Zur Chlorabtrennung wird das getrocknete und verdichtete Reaktionsgasgemisch in einem als Entspannungskühler ausgebildeten, sogenannten Chlor-Rekuperator bis auf einen kleinen Restanteil von ca. 10 bis 20 % verflüssigt. Der im Chlor-Rekuperator abgetrennte flüssige Chlorhauptstrom wird anschließend in einer Destillationskolonne nachgereinigt, in der das Chlor von restlichem gelöstem Chlorwasserstoff, Sauerstoff und Inertgasen befreit wird. Das am Kopf der Destillationskolonne abgezogene, im Wesentlichen aus Chlorwasserstoff, Chlor, Sauerstoff und Inertgasen bestehende Gas wird in die Kompressionsstufe zurückgeführt. Die am Chlor-Rekuperator nicht auskondensierten Gaskomponenten einschließlich des Rest-Chloranteils werden teilweise in einer Nachkühlstufe bei deutlich niedrigerer Temperatur verflüssigt. Das verbleibende Abgas aus nicht umgesetztem Chlorwasserstoff, Sauerstoff sowie Inertgasen wird in den Oxidationsreaktor recycliert. Eine Teilmenge des recyclierten Gases wird als Purge-Gasstrom abgetrennt und aus dem Verfahren ausgeschleust, um eine Aufpegelung von Verunreinigungen zu verhindern.

Bei dem in der Deacon-Reaktion eingesetzten Chlorwasserstoff handelt es sich dabei häufig um gasförmigen Chlorwasserstoff, der in anderen Herstellverfahren, beispielsweise bei der Isocyanat-Herstellung, als Koppelprodukt anfällt.

Nachteilig an den Verfahren des Standes der Technik, bei denen Chlor aus dem chlorhaltigen Produktgasstrom der Chlorwasserstoff-Oxidation ausschließlich durch Auskondensieren abgetrennt wird, ist, dass sehr tiefe Temperaturen erforderlich sind, um den Produktgasstrom weitgehend von Chlor zu befreien. Auch enthält der die nicht kondensierbaren Gasbestandteile enthaltende Restgasstrom noch erhebliche Mengen Inertgase einschließlich Kohlendioxid. Diese würden sich bei der Rückführung des sauerstoffhaltigen Restgasstroms in den Chtorwasserstoff-Oxidationsreaktor auf unzulässig hohe Werte aufpegeln, so dass von diesem Restgasstrom vor Rückführung in die Chlorwasserstoff-Oxidation ein Purge-Gasstrom abgetrennt und aus dem Verfahren ausgeschleust werden muss. Dieser Purge-Gasstrom enthält aber noch nennenswerte Mengen Chlor, da die Abtrennung von Chlor durch Auskondensieren nur unvollständig gelingt. Dabei gehen also mit dem Purge-Gasstrom nennenswerte Mengen Chlor verloren.

Aufgabe der Erfindung ist es, ein verbessertes Verfahren zur Herstellung von Chlor aus Chlorwasserstoff bereitzustellen, und insbesondere den Nachteilen des Standes der Technik abzuhelfen.

Gelöst wird die Aufgabe durch ein Verfahren zur Herstellung von Chlor aus Chlorwasserstoff mit den Schritten:
a) Einspeisung eines Chlorwasserstoff enthaltenden Stroms a1 und eines Sauerstoff enthaltenden Stroms a2 in eine Oxidationszone und katalytische Oxidation von Chlorwasserstoff zu Chlor, wobei ein Produktgasstrom a3 enthaltend Chlor, Wasser, Sauerstoff, Kohlendioxid und gegebenenfalls Inertgase erhalten wird;
b) Abkühlung des Produktgasstroms a3 und Abtrennung von Wasser und von Chlorwasserstoff als wässrige Salzsäure, wobei ein Gasstrom b enthaltend Chlor, Wasser, Sauerstoff, Kohlendioxid und gegebenenfalls Inertgase verbleibt;
c) Trocknung des Gasstroms b, wobei ein im Wesentlichen wasserfreier Gasstrom c enthaltend Chlor, Sauerstoff, Kohlendioxid und gegebenenfalls Inertgase verbleibt;
d) zumindest teilweise Verflüssigung des Gasstroms c und eines chlorreichen Rückstroms f1 enthaltend Chlor, Sauerstoff und Kohlendioxid durch Verdichtung und Abkühlung, wobei ein zumindest teilweise verflüssigter Strom d erhalten wird;
e) Gas/Flüssig-Trennung des Stroms d in einen Gasstrom e1 enthaltend Chlor, Sauerstoff, Kohlendioxid und gegebenenfalls Inertgase und einen Flüssigkeitsstrom e2 enthaltend Chlor, Sauerstoff und Kohlendioxid, indem der verdichtete Strom d auf eine Kolonne gegeben wird und zum Teil im Kreis geführt wird, wobei der in dem chlorreichen Flüssigkeitsstrom gelöste Sauerstoff und gegebenenfalls gelöste Inertgase durch den in der Kolonne aufsteigenden Gasstrom aus dem ablaufenden Flüssigkeitsstrom herausgestrippt und gleichzeitig in dem aufsteigenden Gasstrom enthaltendes Kohlendioxid von dem ablaufenden Flüssigkeitsstrom aus dem Gasstrom herausgelöst wird;
f) Einspeisung zumindest eines Teils des Gasstroms e1 in eine Membrantrenneinheit und Auftrennung in den chlorreichen Rückstrom f1 und einen chlorarmen, Chlor, Sauerstoff und Kohlendioxid enthaltenden Gasstrom f2 durch Membrantrennung und Rückführung des chlorreichen Rückstroms f1 in Schritt d);
g) Trennung des Flüssigkeitsstroms e2 durch Destillation in einen Chlorstrom g1 und einen im Wesentlichen aus Sauerstoff und Kohlendioxid bestehenden Strom g2,
wobei zumindest ein Teil des Gasstroms e1 und/oder f2 die Oxidationszone (stufe a) zurückgefürt wird.

Der in dem Verfahrenschritt a) eingesetzte, Chlorwasserstoff enthaltende Einspeisungsgasstrom a1 ist üblicher Weise ein chlorwasserstoffhaltiger Strom, der bei einem Verfahren als Abstrom anfällt, in dem Chlorwasserstoff als Koppelprodukt gebildet wird. Solche Verfahren sind beispielsweise
(1) die Isocyanat-Herstellung aus Phosgen und Aminen,
(2) die Säurechlorid-Herstellung,
(3) die Polycarbonat-Herstellung,
(4) die Herstellung von Vinylchlorid aus Ethylendichlorid,
(5) die Chlorierung von Aromaten.

Der Chlorwasserstoff enthaltende Einspeisungsgasstrom a1 enthält Nebenbestandteile. Üblicherweise enthält er in Wasser nicht lösliche Verunreinigungen, die sowohl organischer als auch anorganischer Natur sein können. Organische Verunreinigungen sind beispielsweise Kohlenwasserstoffe oder Chlorkohlenwasserstoffe.

Typische Kohlenwasserstoffe, die in den erfindungsgemäß eingesetzten, Chlorwasserstoff enthaltenden Einsatzgasströmen enthalten sein können, umfassen Aromaten wie Benzol, Toluol, Xylole und C₆-C₁₂-Aliphaten. Typische Chlorkohlenwasserstoffe umfassen Phosgen, Tetrachlorkohlenstoff, Vinylchlorid und Dichlorethan. Die Kohlenwasserstoffe und Chlorkohlenwasserstoffe können in Mengen bis 20 Vol.-%, im Allgemeinen bis 30 000 ppm, bevorzugt in Mengen bis 10 000 ppm und insbesondere in Mengen von 100 bis 3000 ppm enthalten sein. Als anorganische Nebenbestandteile können beispielsweise Kohlenmonoxid, Kohlendioxid, Stickstoff sowie weitere Inertgase, im Allgemeinen in Mengen bis 10 Vol.-%, vorzugsweise in Mengen bis zu 1 Vol.-%, enthalten sein.

Vorzugsweise wird der chlorwasserstoffhaltige Einspeisungsstrom a1 vor der Einleitung in die Oxidationszone durch Überleiten über ein Reinigungsbett und Adsorption von darin enthaltenen Kohlenwasserstoffen an dem Reinigungsbett vorgereinigt. Das Reinigungsbett besteht dabei aus geeigneten Adsorbentien, vorzugsweise in stückiger Form wie Kugeln, Extrudate oder Tabletten. Geeignete Materialien, die als Adsorbentien in Frage kommen, sind beispielsweise Aktivkohle, Aluminiumoxid, Titanoxid, Siliziumdioxid, Eisenoxid, Zeolithe und Molsiebe. Geeignete Materialien können auch Metalloxide oder Metallhalogenide, wie Kupfer- oder Rutheniumoxide oder -halogenide bzw. deren Gemische, auf einem Träger aus einem feuerfesten anorganischen Material wie Aluminiumoxid, Titanoxid oder Siliziumdioxid enthalten. Bevorzugte Adsorbentien sind Aluminiumoxid, Aktivkohle und Tonerden.

In dem Oxidationsschritt a) wird der Chlorwasserstoff enthaltende Strom a1 mit einem Sauerstoff enthaltender Strom a2 in eine Oxidationszone eingespeist und katalytisch oxidiert.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Übliche Reaktionstemperaturen liegen zwischen 150 und 500°C, übliche Reaktionsdrucke liegen zwischen 1 und 25 bar. Ferner ist es zweckmäßig, Sauerstoff in überstöchiometrischen Mengen einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Geeignete Katalysatoren enthalten beispielsweise Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Geeignet sind ferner Katalysatoren, welche auf einem Träger 0,001 bis 30 Gew.-% Gold, 0 bis 3 Gew.-% eines oder mehrerer Erdalkalimetalle, 0 bis 3 Gew.-% eines oder mehrerer Alkalimetalle, 0 bis 10 Gew.-% eines oder mehrerer Seltenerdmetalle und 0 bis 10 Gew.-% eines oder mehrerer weiterer Metalle, ausgewählt aus der Gruppe bestehend aus Ruthenium, Palladium, Platin, Osmium, Iridium, Silber, Kupfer und Rhenium, jeweils bezogen auf das Gesamtgewicht des Katalysators, enthalten.

Derartige Gold enthaltende Trägerkatalysatoren weisen, insbesondere bei Temperaturen von ≤ 250°C, bei der Chlorwasserstoff-Oxidation eine höhere Aktivität als die Ruthenium enthaltenden Katalysatoren des Standes der Technik auf.

Übliche Reaktionsapparate, in denen die katalytische Chlorwasserstoff-Oxidation durchgeführt wird, sind ein Festbett- oder Wirbelbettreaktor. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich, als Fließ-oder Festbettverfahren durchgeführt werden. Bevorzugt wird sie in einem Wirbelschichtreaktor bei einer Temperatur von 320 bis 400°C und einem Druck von 2 - 8 bar durchgeführt.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform besteht darin, dass man in dem Festbettreaktor eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnlich äußere Abmessungen haben.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialien eignen sich beispielsweise Siliciumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt gamma- oder alpha-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei Temperaturen von 100 bis 500°C, bevorzugt 100 bis 400°C beispielsweise unter einer Stickstoff-, Argon- oder Luftatmosphäre getrocknet und gegebenenfalls calciniert werden. Bevorzugt werden die Formkörper zunächst bei 100 bis 200°C getrocknet und anschließend bei 200 bis 400°C calciniert.

Der Umsatz an Chlorwasserstoff im einfachen Durchgang kann auf 15 bis 90 %, bevorzugt 40 bis 85 %, besonders bevorzugt 50 bis 80 % begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

In einem Schritt b), der auch als Quench- und Absorptionsschritt bezeichnet werden kann, wird der Produktgasstrom a3 abgekühlt und werden Wasser und Chlorwasserstoff aus dem Produktgasstrom a3 als wässrige Salzsäure abgetrennt. Der heiße Produktgasstrom a3 wird durch in Kontakt bringen mit einem Quenchmittel, im Allgemeinen Wasser oder verdünnte Salzsäure, in einem geeigneten Phasenkontaktapparat, beispielsweise einer Packungs- oder Bodenkolonne, einem Strahlwäscher oder einem Sprühturm, abgekühlt, wobei im Allgemeinen bereits ein Teil des Chlorwasserstoffs in dem Quenchmittel absorbiert wird. Der so abgekühlte Produktgasstrom wird anschließend mit einem Absorptionsmittel in Kontakt gebracht. Als Absorptionsmittel geeignet sind Wasser und jede verdünnte Salzsäure, die nicht an Chlorwasserstoff gesättigt ist. Vorzugsweise wird Wasser als Absorptionsmittel eingesetzt. Die Absorptionstemperatur beträgt üblicherweise von 0 bis 150°C, vorzugsweise von 30 bis 100°C, der Absorptionsdruck beträgt üblicherweise von 0,5 bis 20 bar, vorzugsweise von 1 bis 10 bar. Die resultierende Salzsäure kann als Quenchmittel zur Abkühlung des Produktgasstroms a3 eingesetzt werden.
Der die Quench- und Absorptionszone verlassende Gasstrom b enthält Chlor, Wasser, Sauerstoff, Kohlendioxid und im Allgemeinen auch Inertgase (hauptsächlich Stickstoff). Daneben kann er auch noch gewisse Mengen an Chlorwasserstoff enthalten. Dieser kann in einer sich anschließenden Trocknungsstufe c) durch in Kontakt bringen mit geeigneten Trocknungsmitteln von Feuchtigkeitsspuren befreit werden. Geeignete Trocknungsmittel sind beispielsweise konzentrierte Schwefelsäure, Molsiebe oder hygroskopische Adsorbentien. Es wird ein im Wesentlichen wasserfreier Gasstrom c enthaltend Chlor, Sauerstoff, Kohlendioxid und gegebenenfalls Inertgase erhalten.

In einem Schritt d) wird der Gasstrom c und ein chlorreicher, Chlor, Sauerstoff und Kohlendioxid enthaltenden Rückstrom f1, welcher durch Membrantrennung (siehe unten) gewonnen wurde, durch Verdichtung und Abkühlung zumindest teilweise verflüssigt. Im Allgemeinen werden beide Ströme vereinigt und durch ein- oder mehrstufige Kompression auf einen Druck im Bereich von 5 bis 50 bar verdichtet und gleichzeitig durch ein- oder mehrstufige Abkühlung auf eine Temperatur im Bereich von 0 bis -70°C abgekühlt. Die Ströme können auch getrennt verdichtet und abgekühlt werden, wobei ein oder mehrere getrennt verflüssigte Ströme d resultieren können.

In einer sich anschließenden Gas/Flüssig-Trennung e) wird der Strom d in einen Gasstrom e1 enthaltend Chlor, Sauerstoff, Kohlendioxid und gegebenenfalls Inertgase und in einen Flüssigstrom e2 enthaltend Chlor, Sauerstoff und Kohlendioxid getrennt. Dieser Schritt wird auch als "Flash" bezeichnet. Die Gas/Flüssig-Trennung erfolgt, indem der verdichtete Stroms d auf eine Kolonne gegeben und im Gegenstrom zur aufsteigenden Gasphase geführt wird und die in der Kolonne ablaufende, chlorreiche Flüssigphase zum Teil wieder auf die Kolonne aufgegeben und so zum Teil im Kreis geführt wird. Vorzugsweise werden 0 bis 80 Gew.-% des am Kolonnensumpf entnommen chlorreichen Flüssigkeitsstroms im Kreis geführt, also vorzugsweise am Kolonnenkopf wieder aufgegeben. Dabei wird in dem aufsteigenden Gasstrom enthaltenes Kohlendioxid aus dem Gasstrom herausgelöst und kann später problemlos durch Destillation (zusammen mit verbliebenem Sauerstoff) von Chlor abgetrennt werden. Es resultiert ein kohlendioxidarmer Gasstrom e1, der zumindest teilweise in die Oxidationszone zurückgeführt werden kann. So können die Teilströme, die von den in die Oxidationszone zurückgeführten Strömen e1 bzw. f1 als Purge-Gasströme abgetrennt und aus dem Verfahren ausgeschleust werden, um eine Aufpegelung von Kohlendioxid zu verhindern, verhältnismäßig gering bleiben, wodurch auch der Chlorverlust durch die Purge-Gasströme begrenzt wird.

Streng genommen können die Schritte e) und g), also Gas/Flüssig-Trennung und Destillation der Flüssigphase e2 zur Gewinnung eines reinen Chlorstroms g1, auch gemeinsam in einer Kolonne durchgeführt werden. Bevorzugt ist es jedoch, zuerst die Gas/Flüssig-Trennung in einer ersten Kolonne und anschließend die Gewinnung von Chlor durch Destillation der Flüssigphase in einer weiteren Kolonne durchzuführen. Es resultiert eine insgesamt bessere Trennwirkung und ein Chlorstrom g1 höherer Reinheit.

Der abgetrennte Gasstrom e1 enthält im Allgemeinen 1 bis 40 Mol-% Chlor, 1 bis 80 Mol-% Sauerstoff, 1 bis 80 Mol-% Stickstoff, 0 bis 30 Mol% Kohlendioxid sowie 0 bis 20 Mol-% weitere Bestandteile wie beispielsweise Edelgase, Kohlenmonoxid und Chlorwasserstoff.

Der Flüssigstrom e2 enthält im Allgemeinen 80 bis 100 Mol-% Chlor, 0 bis 5 Mol-% Sauerstoff, 0 bis 30 Mol-% Kohlendioxid sowie 0 bis 30 Mol-% weitere Bestandteile wie beispielsweise Edelgase, Kohlenmonoxid und Chlorwasserstoff.

In einem Schritt f) wird zumindest ein Teils des Gasstroms e1 in eine Membrantrenneinheit eingespeist und durch Membrantrennung in den chlorreichen Strom f1 und einen chlorarmen, Chlor, Sauerstoff und Kohlendioxid enthaltenden Gasstrom f2 aufgetrennt. In einer Ausführungsform wird der gesamte Gasstrom e1 in die Membrantrenneinheit eingespeist. In einer weiteren Ausführungsform wird nur ein Teil des Gasstrom e1 in die Membrantrenneinheit eingespeist und ein weiterer Teil direkt in die Oxidationszone (Schritt a)) zurückgeführt. Das Verhältnis dieser Teilströme kann variabel gestaltet werden. So kann bei Abnahme des Flusses durch die Membran - aufgrund einer Alterung derselben - ein zunehmender Teilstrom des Stroms e1 direkt in die Oxidationszone zurückgeführt werden.

Die Temperatur des Gasstroms e1 ist im Allgemeinen < 10°C, bevorzugt < -5°C, besonders bevorzugt < -20°C. Der Druck auf der Retentat-Seite der Membrantrenneinheit beträgt im Allgemeinen 5 bis 50 bar, bevorzugt 15 bis 35 bar. Bei der Membrantrennung macht man sich also auch die Tatsache zu Nutze, dass der verdichtete, durch Gas/Flüssig-Trennung abgetrennte Gasstrom e1 unter einem hohen Druck steht. Der Druck auf der Permeat-Seite der Membrantrenneinheit beträgt im Allgemeinen 1 bis 15 bar, bevorzugt 1 bis 10 bar, besonders bevorzug 1 bis 5 bar.

Die Auftrennung in einen chlorreichen und einen chlorarmen Teilstrom kann sowohl durch Membranen, die eine Permselektivität für Chlor aufweisen, also Chlor besser als die übrigen Gasbestandteile permeieren lassen, als auch durch Membranen, die die übrigen Gasbestandteile, insbesondere Stickstoff und Sauerstoff, besser als Chlor permeieren lassen, bewirkt werden. Bei einer mehrstufigen Membrantrennung ist auch eine Kombination aus mehreren verschiedenen Membranen möglich, wobei Membranen beider Typen kombiniert werden können. Membranen des zuerst genannten Typs sind zum Beispiel in US 5,538,535 beschrieben, Membranen des zuletzt genannten Typs sind zum Beispiel in WO 2001/02290 beschrieben.

Die trennaktiven Schichten der Membranen können aus Polymeren oder aus anorganischen Materialien wie Kohlenstoff oder keramischen Materialien bestehen. Besonders bevorzugt werden in dem erfindungsgemäßen Verfahren Membranen eingesetzt, bei denen ein mit Chlor angereicherter Strom als Permeat und ein an Chlor abgereicherter Strom als Retentat anfällt. Die trennaktiven Schichten derartiger Membranen bestehen im Allgemeinen aus Polymeren. Bevorzugt sind solche Polymere, die einen geringen Grad an Kristallinität aufweisen oder deren Glasübergangstemperaturen sogar tiefer als die Betriebstemperatur der Membrantrenneinheit liegen. Geeignet sind auch Blockcopolymere mit mindestens einer Phase, die die vorgenannten Eigenschaften aufweist.

Beispiele geeigneter Polymere sind Silikongummi, bevorzugt Polydimethylsiloxan (PDMS), besonders bevorzugt quervernetztes PDMS. Geeignet sind ferner perfluorierte Polymere und deren Copolymere sowie Polyolefin-Copolymere wie Ethylen-Propylen-Dien-Terpolymer (EPD) und Ethylen-Propylen-Copolymer (EPM), die eine ausreichende Stabilität gegenüber Chlor aufweisen. Die trennaktive Schicht kann eine dichte Schicht oder eine mikroporöse Schicht sein.

Die trennaktiven Schichten sind üblicherweise auf ein- oder mehrschichtigen Trägerstrukturen (Supports), die gegenüber Chlor stabil sind, aufgebracht oder befinden sich in den Poren von porösen Trägerstrukturen. Derartige Trägerstrukturen können aus stabilen Polymeren wie Polytetrafluorethen (PTFE) oder Polyvinylidenfluorid (PVDF) oder aus anorganische Materialien wie Metall, Glas, Kohlenstoff oder Keramik bestehen.

Die Membranen werden üblicherweise in druckfesten Gehäusen eingesetzt, die eine Trennung zwischen Retentatraum und Permeatraum bei den erforderlichen Druckbedingungen erlauben. Die Membranen können in Flach-, Rohr-, Multikanalelement-, Kapillar- oder Wickelgeometrie ausgeführt werden, für die entsprechende Druckgehäuse, die eine Trennung zwischen Retentat und Permeat erlauben, verfügbar sind. Mehrere dieser Elemente können in einem Gehäuse zu einem Modul zusammengefasst werden.

Es wird ein chlorreicher Strom f1 mit im Allgemeinen 5 bis 50 Mol-%, bevorzugt 15 bis 30 Mol-% Chlor erhalten. Der chlorarme Strom f2 weist im Allgemeinen noch einen Chlorgehalt von 0,1 bis 5 Mol-%, bevorzugt 0,1 bis 3 Mol-%, besonders bevorzugt 0,1 bis 1 Mol-% auf.

Der chlorreiche Strom f1 wird als Rückstrom in die Abkühlungs- und Verdichtungsstufe d) zurückgeführt.

Der chlorarme Strom f2 kann als Abgasstrom aus dem Verfahren ausgeschleust oder zumindest teilweise in die Oxidationszone (Stufe a)) zurückgeführt wird. Der chlorarme Strom f2 kann vollständig oder nur zum Teil in die Oxidationszone zurückgeführt werden, wobei im letzteren Fall ein weiterer Teilstrom als so genannter Purge-Gasstrom aus dem Verfahren ausgeschleust wird.

Der bei der Gas/Flüssig-Trennung anfallende Flüssigstrom e2 wird nachfolgend durch Destillation in einen Chlorstrom g1 und einen im Wesentlichen aus Sauerstoff und Kohlendioxid bestehenden Strom g2 aufgetrennt. Die Destillation wird im Allgemeinen in einer Destillationskolonne mit beispielsweise 5 bis 30 theoretischen Böden, bei einer Temperatur im Bereich von -50°C bis +90°C und bei einem Druck im Bereich von 4 bis 40 bar durchgeführt. Der so erhaltene Chlorstrom g1 weist im Allgemeinen einen Chlorgehalt von 95 bis 100 Mol-% auf. Der im Wesentlichen aus Sauerstoff und Kohlendioxid bestehende Strom g2, der diese beiden Komponenten im Allgemeinen zu mindestens 50 Mol-% enthält, wird als Abgasstrom aus dem Verfahren ausgeschleust.

Die Erfindung wird nachstehend anhand der Zeichnungen näher erläutert.

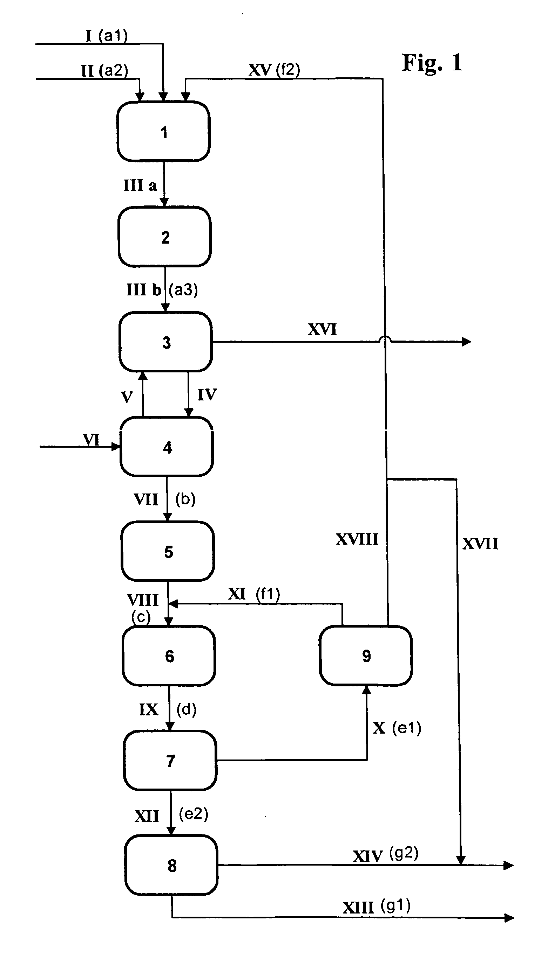

Figur 1 gibt eine Ausführungsform des erfindungsgemäßen Verfahrens schematisch wieder.

Ein Chlorwasserstoffstrom I (a1) und ein Strom II (a2) aus technisch reinem Sauerstoff werden in die Chlorwasserstoff-Oxidationszone, bestehend aus einem als Wirbelschichtreaktor ausgestalteten Hauptreaktor 1 und einem als Festbettreaktor ausgestalteten Nachreaktor 2 eingespeist. Das den Nachreaktor 2 verlassende Produktgasgemisch IIb (a3), welches im Wesentlichen aus Chlor, Wasserdampf, Sauerstoff, Chlorwasserstoff und Kohlendioxid besteht, wird in dem Phasenkontaktapparat 3, beispielsweise einer Packungskolonne, einem Strahlwäscher oder einem Sprühturm, mit gekühlter, verdünnter Salzsäure V in Kontakt gebracht, wobei ein Strom XVI aus höher konzentrierter Salzsäure (mit einem HCl-Gehalt von 20 bis 35 Gew.-%) anfällt. Der noch HCl-haltige Abstrom IV wird in der Absorptionskolonne 4, beispielsweise einer Packungs- oder Bodenkolonne, mit Wasser VI in Kontakt gebracht, wobei ein Strom aus verdünnter Salzsäure (mit einem HCl-Gehalt von 1 bis 15 Gew.-%) V anfällt, welche gekühlt wird und als Quenchmittel in den Phasenkontaktapparat 3 geführt wird. Der die Chlorwasserstoff-Absorptionskolonne 4 verlassende Strom VII (b) besteht im Wesentlichen aus Chlor, Sauerstoff und Kohlendioxid und enthält noch Spuren von Wasser. Dieser Strom wird in einer Boden- oder Packungskolonne 5 mit konzentrierter H₂SO₄ in Kontakt gebracht, um Wasserspuren zu entfernen. Der resultierende, praktisch wasserfreie Strom VIII (c) wird anschließend in der Kompressions- und Abkühlstufe 6, umfassend einen mehrstufigen Verdichter mit Zwischenkühlung (Kühlmittel: Wasser), gefolgt von einem Wärmetauscher (mit Solekühlung), auf einen Druck von ca. 15 bis 35 bar verdichtet und auf eine Temperatur von ca. -20 bis -50°C abgekühlt, wobei der größte Teil des Chlors verflüssigt wird. Der resultierende, teilverflüssigte Strom IX (d) wird in den Phasentrennapparat 7 geführt. Dieser ist vorzugsweise als Packungskolonne ausgestaltet, wobei der Strom 9 am Kopf der Kolonne aufgegeben wird und ein Teil der am Kolonnensumpf abgezogenen chlorreichen flüssigen Phase im Kreis geführt wird, d.h. wieder auf die Kolonne aufgegeben wird. Die abgetrennte Gasphase X (e1) besteht im Wesentlichen aus Chlor, Sauerstoff und Kohlendioxid. Dieser Strom X (e1) wird einer Membrantrenneinheit 9 zugeführt und dort in einen chlorreichen Strom XI (f1), der im Wesentlichen noch Sauerstoff und Kohlendioxid enthält, und einen chlorarmen Strom XV (f2), der überwiegend Sauerstoff und daneben noch Kohlendioxid enthält, aufgetrennt. Der chlorreiche Strom XI wird vor die Verdichtungs- und Abkühlstufe 6 zurückgeführt. Von dem Strom XV (f2) wird ein Purge-Gasstrom XVII abgetrennt und aus dem Verfahren ausgeschleust. Der größte Teil des Stroms XV (f2) wird jedoch in den Hauptreaktor 1 zurückgeführt. Der von dem Phasentrennapparat ablaufende flüssige Chlorstrom XII (e2), der noch Kohlendioxid und Sauerstoff enthält, wird in die Destillationskolonne 8 eingespeist. Diese ist beispielsweise als Bodenkolonne mit 10 bis 20 theoretischen Böden ausgestaltet und wird bei einer Temperatur von - 50 bis + 90°C und einem Druck von 4 bis 40 bar betrieben. Es resultiert ein Rein-Chlorstrom XIII (g1) mit einem Chlorgehalt von > 95 Gew.-% als Sumpfabzugsstrom und ein Abstrom XIV (g2) aus Kohlendioxid und Sauerstoff, welcher nur sehr geringe Mengen an Chlor (typischerweise < 5 Vol.-%) enthält und aus dem Verfahren ausgeschleust wird.

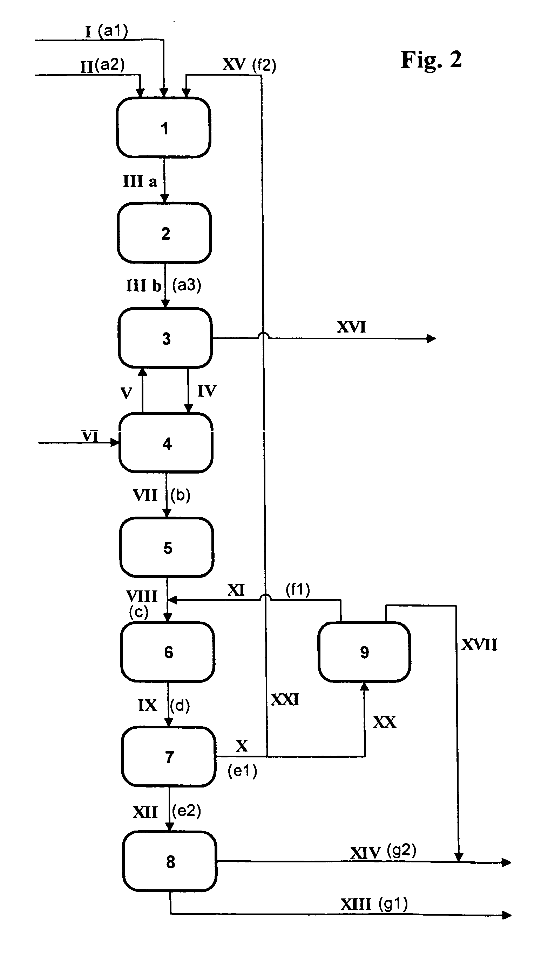

Figur 2 gibt schematisch eine weitere Ausführungsform des erfindungsgemäßen Verfahrens wieder.

Im Unterschied zu dem Verfahren gemäß Figur 1 wird ein Teilstrom XXI von der durch Gas/Fiüssig-Trennung erhaltenen Gasphase X abgetrennt und direkt in den Hauptreaktor 1 zurückgeführt. Ein weiterer Teilstrom XX wird der Membrantrenneinheit 9 zugeführt, wobei der erhaltene chlorarme Strom als Purge-Gasstrom XVII aus dem Verfahren ausgeschleust wird.

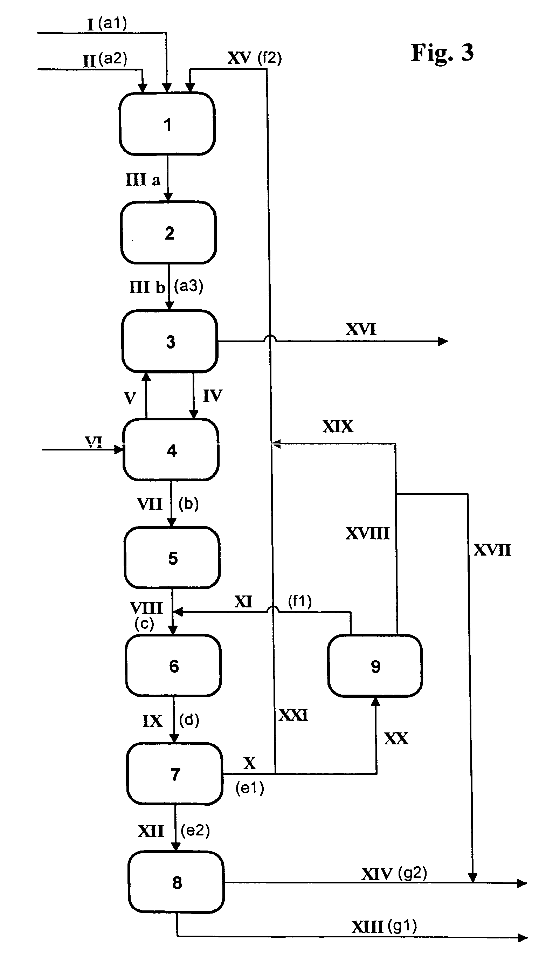

Figur 3 gibt schematisch eine weitere Ausführungsform des erfindungsgemäßen Verfahrens wieder.

Im Unterschied zu dem Verfahren gemäß Figur 2 wird von dem durch Membrantrennung erhaltenen chlorarmen Strom XVIII ein erster Teilstrom XVII als Purge-Gasstrom aus dem Verfahren ausgeschleust, und ein zweiter Teilstrom XIX in den Hauptreaktor 1 zurückgeführt.

## Patentansprüche

1. Verfahren zur Herstellung von Chlor aus Chlorwasserstoff mit den Schritten:
a) Einspeisung eines Chlorwasserstoff enthaltenden Stroms a1, der Nebenbestandteile enthält, und eines Sauerstoff enthaltenden Stroms a2 in eine Oxidationszone und katalytische Oxidation von Chlorwasserstoff zu Chlor, wobei ein Produktgasstrom a3 enthaltend Chlor, Wasser, Sauerstoff, Kohlendioxid und Inertgase erhalten wird;
b) Abkühlung des Produktgasstroms a3 und Abtrennung von Wasser und von Chlorwasserstoff als wässrige Salzsäure, wobei ein Gasstrom b enthaltend Chlor, Wasser, Sauerstoff, Kohlendioxid und Inertgase verbleibt;
c) Trocknung des Gasstroms b, wobei ein im Wesentlichen wasserfreier Gasstrom c enthaltend Chlor, Sauerstoff, Kohlendioxid und Inertgase verbleibt;
d) zumindest teilweise Verflüssigung des Gasstroms c und eines chlorreichen, Chlor, Sauerstoff und Kohlendioxid enthaltenden Rückstroms f1 durch Verdichtung und Abkühlung, wobei ein zumindest teilweise verflüssigter Strom d erhalten wird;
e) Gas/Flüssig-Trennung des Stroms d in einen Gasstrom e1 enthaltend Chlor, Sauerstoff, Kohlendioxid und Inertgase und in einen Flüssigkeitsstrom e2 enthaltend Chlor, Sauerstoff und Kohlendioxid, indem der verdichtete Strom d auf eine Kolonne gegeben wird und zum Teil im Kreis geführt wird, wobei der in dem chlorreichen Flüssigkeitsstrom gelöste Sauerstoff und gegebenenfalls gelöste Inertgase durch den in der Kolonne aufsteigenden Gasstrom aus dem ablaufenden Flüssigkeitsstrom herausgestrippt und gleichzeitig in dem aufsteigenden Gasstrom enthaltenes Kohlendioxid von dem ablaufenden Flüssigkeitsstrom aus dem Gasstrom herausgelöst wird;
f) Einspeisung zumindest eines Teils des Gasstroms e1 in eine Membrantrenneinheit und Auftrennung in den chlorreichen Rückstrom f1 und einen chlorarmen, Chlor, Sauerstoff und Kohlendioxid enthaltenden Gasstrom f2 durch Membrantrennung und Rückführung des chlorreichen Rückstroms f1 in Schritt d);
g) Trennung des Flüssigstroms e2 durch Destillation in einen Chlorstrom g1 und einen im Wesentlichen aus Sauerstoff und Kohlendioxid bestehenden Strom g2,
wobei zumindest ein Teil des Gasstroms e1 und/oder f2 in die Oxidationszone (Stufe a)) zurückgeführt wird.

2. Verfahren nach Anspruch 1 **dadurch gekennzeichnet, dass** der chlorarme Strom f2 zumindest teilweise in die Oxidationszone (Stufe a)) zurückgeführt wird.

3. Verfahren nach Anspruch 2, **dadurch gekennzeichnet, dass** ein Teil des chlorarmen Stroms f2 aus dem Verfahren ausgeschleust wird.

4. Verfahren nach einem der Ansprüche 1 bis 3, **dadurch gekennzeichnet, dass** ein Teil des Stromes e1 in die Oxidationszone (Stufe a)) zurückgeführt wird.

## Claims

1. A process for preparing chlorine from hydrogen chloride, which comprises the steps:
a) feeding of a stream a1 comprising hydrogen chloride and secondary constituents and of a stream a2 comprising oxygen into an oxidation zone and catalytic oxidation of hydrogen chloride to chlorine, giving a product gas stream a3 comprising chlorine, water, oxygen, carbon dioxide and inert gases;
b) cooling of the product gas stream a3 and removal of water and hydrogen chloride as aqueous hydrochloric acid, leaving a gas stream b comprising chlorine, water, oxygen, carbon dioxide and inert gases;
c) drying of the gas stream b to leave a gas stream c which is substantially free of water and comprises chlorine, oxygen, carbon dioxide and inert gases;
d) at least partial liquefaction of the gas stream c and of a chlorine-rich recycle stream f1 comprising chlorine, oxygen and carbon dioxide by compression and cooling, giving an at least partially liquefied stream d;
e) gas/liquid separation of the stream d into a gas stream e1 comprising chlorine, oxygen, carbon dioxide and inert gases and into a liquid stream e2 comprising chlorine, oxygen and carbon dioxide by introducing the compressed stream d into a column at the top and recirculating part of it, with the oxygen dissolved in the chlorine-rich liquid stream and any dissolved inert gases being stripped out of the descending liquid stream by the gas stream ascending in the column, and carbon dioxide present in the ascending gas stream being simultaneously dissolved out of the gas stream by the descending liquid stream;
f) feeding of at least part of the gas stream e1 into a membrane separation unit and fractionation by membrane separation to give the chlorine-rich recycle stream f1 and a gas stream f2 which is low in chlorine and comprises chlorine, oxygen and carbon dioxide and recirculation of the chlorine-rich recycle stream f1 to step d);
g) separation of the liquid stream e2 by distillation into a chlorine stream g1 and a stream g2 comprising essentially oxygen and carbon dioxide, where at least part of the gas stream e1 and/or f2 is recirculated to the oxidation zone (step a)).

2. The process according to claim 1, wherein the stream f2 which is low in chlorine is at least partly recirculated to the oxidation zone (step a)).

3. The process according to claim 2, wherein part of the stream f2 which is low in chlorine is discharged from the process.

4. The process according to any of claims 1 to 3, wherein part of the stream e1 is recirculated to the oxidation zone (step a)).

## Revendications

1. Procédé pour la préparation de chlore à partir de chlorure d'hydrogène, présentant les étapes :
a) injection d'un flux a1 contenant du chlorure d'hydrogène, qui contient des constituants secondaires, et d'un flux a2 contenant de l'oxygène dans une zone d'oxydation et oxydation catalytique du chlorure d'hydrogène en chlore, un flux gazeux de produits a3 contenant du chlore, de l'eau, de l'oxygène, du dioxyde de carbone et des gaz inertes étant obtenu ;
b) refroidissement du flux gazeux de produits a3 et séparation de l'eau et du chlorure d'hydrogène sous forme d'acide chlorhydrique aqueux, un flux gazeux b, contenant du chlore, de l'eau, de l'oxygène, du dioxyde de carbone et des gaz inertes restant ;
c) séchage du flux gazeux b, un flux gazeux c essentiellement exempt d'eau, contenant du chlore, de l'oxygène, du dioxyde de carbone et des gaz inertes restant ;
d) liquéfaction au moins partielle du flux gazeux c et d'un flux de retour f1 riche en chlore, contenant du chlore, de l'oxygène et du dioxyde de carbone par compression et refroidissement, avec obtention d'un flux d au moins partiellement liquéfié ;
e) séparation gaz/liquide du flux d en un flux gazeux e1 contenant du chlore, de l'oxygène, du dioxyde de carbone et des gaz inertes et en un flux liquide e2 contenant du chlore, de l'oxygène et du dioxyde de carbone, en ce que le flux d comprimé est appliqué sur une colonne et est guidé en partie en circulation, l'oxygène dissous dans le flux liquide riche en chlore et le cas échéant les gaz inertes dissous étant réextraits du flux liquide descendant par le flux gazeux ascendant dans la colonne et le dioxyde de carbone contenu dans le flux gazeux ascendant étant simultanément éliminé du flux gazeux par le flux liquide descendant;
f) injection d'au moins une partie du flux gazeux e1 dans une unité de séparation à membrane et séparation en flux de retour f1 riche en chlore et en flux gazeux f2 pauvre en chlore, contenant du chlore, de l'oxygène et du dioxyde de carbone par séparation sur membrane et recyclage du flux de retour f1 riche en chlore dans l'étape d) ;
g) séparation du flux liquide e2 par distillation en un flux de chlore g1 et un flux g2 essentiellement constitué d'oxygène et de dioxyde de carbone,
au moins une partie du flux gazeux e1 et/ou f2 étant recyclée dans la zone d'oxydation (étape a)).

2. Procédé selon la revendication 1, **caractérisé en ce que** le flux f2 pauvre en chlore est recyclé, au moins partiellement, dans la zone d'oxydation (étape a)).

3. Procédé selon la revendication 2, **caractérisé en ce qu'**une partie du flux f2 pauvre en chlore est évacuée du procédé.

4. Procédé selon l'une quelconque des revendications 1 à 3, **caractérisé en ce qu'**une partie du flux e1 est recyclée dans la zone d'oxydation (étape a)).
